# EUROPÄISCHE PATENTANMELDUNG

(11) **EP 4 001 741 A1**
(43) Veröffentlichungstag der Anmeldung: **25.05.2022**
(21) Anmeldenummer: 20208068.5
(22) Anmeldetag: 17.11.2020
(51) Int. Cl.: F21S 41/143, F21S 41/151, F21S 41/153, F21S 41/24, F21S 41/20, F21S 41/32, F21S 41/663, B60Q 1/10, B60Q 1/115, F21S 41/25

(54) **BELEUCHTUNGSVORRICHTUNG FÜR EINEN KRAFTFAHRZEUGSCHEINWERFER**

(71) Anmelder: ZKW Group GmbH, 3250 Wieselburg (AT)
(72) Erfinder: Böllmann, Michael, 83607 Holzkirchen (DE); Jantschek, Martin, 82291 Mammendorf (DE); Brauner, Nina, 3033 Altlengbach (AT); Fischer, Marina, 3250 Wieselburg (AT); Kyselica, Jaroslav, 95703 De erice (SK); Kokoska, Anton, 02705 Zázrivá (SK)
(74) Vertreter: Patentanwaltskanzlei Matschnig & Forsthuber OG

(57) **Zusammenfassung**

Beleuchtungsvorrichtung (10) für einen Kraftfahrzeugscheinwerfer eines einspurigen Kraftfahrzeugs zur Erzeugung einer segmentierten Lichtverteilung, wobei die Beleuchtungsvorrichtung (10) Folgendes umfasst:
- ein Optikkörper (100), umfassend einen Grundkörper (110) und mehrere von dem Grundkörper (110) vorragende Lichtleitkörper (200), welche Lichtleitkörper (200) jeweils eine Lichteintrittsfläche (210) und eine Austrittsfläche (220) aufweisen, wobei die Austrittsflächen (220) benachbarter Lichtleitkörper (200) eine gemeinsame Austrittsfläche (220a) des Optikkörpers (100) bilden,
- mehrere Lichtquellen (50),
- eine Projektionsoptik (300) mit einer optischen Achse (A), wobei der Grundkörper (110) eine erste und eine zweite Lichtemissionshälfte (110a, 110b) aufweist, wobei jede Lichtemissionshälfte (110a, 110b) Lichtleitkörper (200) aufweist, die zumindest in einer ersten Reihe (R1) entlang einer Geraden und in einer zweiten Reihe (R2) entlang einer Geraden angeordnet sind, wobei die Geraden der ersten und der zweiten Reihe (R1, R2) zueinander um einen ersten Winkelversatz (W1) angeordnet sind, und wobei die erste und die zweite Lichtemissionshälfte (110a, 110b) zueinander spiegelsymmetrisch um eine vertikale Symmetrieachse (V) an dem Grundkörper (110) angeordnet sind.

## Beschreibung

Die Erfindung betrifft eine Beleuchtungsvorrichtung für einen Kraftfahrzeugscheinwerfer eines einspurigen Kraftfahrzeugs zur Erzeugung einer segmentierten Lichtverteilung, wobei die Beleuchtungsvorrichtung Folgendes umfasst:
- ein Optikkörper, umfassend einen Grundkörper und mehrere von dem Grundkörper vorragende Lichtleitkörper zum Formen einer festlegbaren segmentierten Lichtverteilung aus dem Licht von Lichtquellen, welche Lichtleitkörper jeweils eine Lichteintrittsfläche aufweisen, in welche Licht von den Lichtquellen einspeisbar ist, und eine Austrittsfläche aufweisen, aus welcher in den jeweiligen Lichtleitkörper einspeisbares Licht austritt, wobei die Austrittsflächen benachbarter Lichtleitkörper eine gemeinsame Austrittsfläche des Optikkörpers bilden,
- mehrere Lichtquellen, wobei zumindest eine Lichtquelle jeweils einer Eintrittsfläche eines Lichtleitkörpers zugeordnet ist,
- eine Projektionsoptik mit einer optischen Achse, welche Projektionsoptik eingerichtet ist, dass von der gemeinsamen Austrittsfläche austretende Licht vor der Beleuchtungsvorrichtung in Richtung einer Hauptabstrahlrichtung abzubilden.

Weiters betrifft die Erfindung einen Kraftfahrzeugscheinwerfer mit zumindest einer erfindungsgemäßen Beleuchtungsvorrichtung.

Um in Kurvenlage eines einspurigen Kraftfahrzeuges, beispielsweise eines Motorrades, die Ausleuchtung des Sichtbereiches des Fahrers zu verbessern, indem je nach Kurvenlage zusätzliche Lichtsegmente zugeschaltet werden.

Stand der Technik wurde dies bisher mittels zusätzlicher Reflektoren und/oder Lichtmodulen realisiert.

Diese zusätzlichen Module benötigen allerdings viel Bauraum, wobei ferner diese zusätzlichen Module zuvor zueinander eingestellt werden müssen, was zusätzlichen Aufwand bedeutet.

Es ist eine Aufgabe der Erfindung eine verbesserte Beleuchtungsvorrichtung bereitzustellen.

Diese Aufgabe wird dadurch gelöst, dass der Grundkörper eine erste und eine zweite Lichtemissionshälfte aufweist, wobei jede Lichtemissionshälfte Lichtleitkörper aufweist, die zumindest in einer ersten Reihe entlang einer Geraden und in einer zweiten Reihe entlang einer Geraden angeordnet sind, wobei die Geraden der ersten und der zweiten Reihe zueinander um einen ersten Winkelversatz angeordnet sind, und wobei die erste und die zweite Lichtemissionshälfte zueinander spiegelsymmetrisch um eine vertikale Symmetrieachse an dem Grundkörper angeordnet sind.

Es kann vorgesehen sein, dass die Austrittsflächen benachbarter Lichtleitkörper in einer Reihe unmittelbar aneinander angrenzen, sodass kein Spalt zwischen den Austrittsflächen vorhanden ist.

Es kann vorgesehen sein, dass die Austrittsfläche benachbarter Lichtleitkörper unterschiedlicher Reihen unmittelbar aneinander angrenzen, sodass kein Spalt zwischen den Austrittsflächen vorhanden ist.

Es kann vorgesehen sein, dass die Austrittsflächen der Lichtleitkörper einer Reihe ausgehend von der vertikalen Symmetrieachse größer werden.

Es kann vorgesehen sein, dass die Eintrittsflächen der Lichtleitkörper in einer gemeinsamen Vertikalebene angeordnet sind, welche Vertikalebene orthogonal zur optischen Achse der Projektionsoptik angeordnet ist.

Es kann vorgesehen sein, dass die Lichtquellen als Leuchtdioden ausgebildet sind.

Es kann vorgesehen sein, dass die Leuchtdioden unabhängig voneinander ansteuerbar sind.

Es kann vorgesehen sein, dass die gemeinsame Austrittsfläche des Optikkörpers gekrümmt ausgebildet ist.

Es kann vorgesehen sein, dass die Projektionsoptik eine gekrümmte Brennfläche aufweist, wobei die gemeinsame Austrittsfläche des Optikkörpers in der Brennfläche der Projektionsoptik angeordnet ist, wobei die gemeinsame Austrittsfläche zumindest abschnittweise der Krümmung der Brennfläche der Projektionsoptik folgt. Hierbei folgt die Austrittsfläche der Krümmung vor allem im zentralen Winkelbereich der Brennfläche, also in einem Bereich nahe der optischen Achse der Projektionsoptik.

Es kann vorgesehen sein, dass jeder Lichtleitkörper sich von der Eintrittsfläche bis zur Austrittsfläche erstreckende Seitenwände aufweist, wobei die Austrittsfläche jeweils von zwei Schmalseiten und zwei Längsseiten begrenzt wird, wobei die Seitenflächen zumindest eines Lichtleitkörpers, welche Seitenflächen orthogonal zu einer Richtung quer zur Hauptabstrahlrichtung stehen, gekrümmt ausgebildet sind, wobei jene Seitenfläche des Lichtleitkörpers, welche zur vertikalen Symmetrieachse gerichtet ist, konvex ausgebildet ist, und jene Seitenfläche des Lichtleitkörpers, welche entgegengesetzt zur vertikalen Symmetrieachse gerichtet ist, konkav ausgebildet ist.

Es kann vorgesehen sein, dass jede Reihe einen von der vertikalen Symmetrieachse weg angeordneten äußersten Lichtleitkörper und zumindest einen innenliegenden Lichtleitkörper aufweist, wobei der zumindest eine innenliegende Lichtleitkörper jeder Reihe die gekrümmten Seitenflächen aufweist.

Hierdurch wird der Geometrie der Petzvalfläche der Projektionslinse entgegengewirkt und entlang einer schiefen Hell-Dunkel-Grenzen der Segmente sowie entlang einer in Kurvenlage schiefen Hell-Dunkel-Grenze ein wünschenswerter Intensitätsverlauf vom Zentrum der Lichtverteilung radial nach außen erreicht.

Es kann vorgesehen sein, dass der Optikkörper im Bereich, in welchem die zwei Lichtemissionshälften bei der vertikalen Symmetrieachse zusammenlaufen, zumindest eine Reihe umfasst, aufweisend zumindest zwei Lichtleitkörper, wobei diese Reihe entlang einer Geraden angeordnet ist, welche orthogonal zur vertikalen Symmetrieachse angeordnet ist, wobei vorzugsweise der Optikkörper zwei Reihen umfasst.

Hierdurch ist es möglich, dass falls die segmentierte Lichtverteilung als Fernlichtverteilung vorgesehen ist, auch im Fernlichtbetrieb Licht ins Vorfeld gelangt, und ein Helligkeitsminimum vermieden werden kann.

Es kann vorgesehen sein, dass die Eintrittsflächen jedes Lichtleitkörpers einen Parallelversatz zur entsprechenden Austrittsfläche aufweisen, sodass die Flächenmittelpunkte der Austrittsfläche und der zugehörigen Eintrittsfläche gesehen in Hauptabstrahlrichtung einen Versatz aufweisen.

Diese Vorkehrung dient ebenfalls dazu, den Lichtschwerpunkt Richtung Zentrum der Lichtverteilung zu verschieben, um eine homogene (stetige) Lichtverteilung zu erzeugen, welche ein Maximum in der Mitte aufweist.

Es kann vorgesehen sein, dass die Beleuchtungsvorrichtung eine Steuereinheit und zumindest einen Rollwinkelsensor umfasst, welcher eingerichtet ist, einen Rollwinkel der Abweichung der Ist-Position von einer definierten Standardposition der Beleuchtungsvorrichtung um die Hauptabstrahlrichtung zu bestimmen, wobei die Steuereinheit eingerichtet ist, einen Rollwinkel von dem zumindest einen Rollwinkelsensor zu empfangen und abhängig von dem Rollwinkel einzelne Reihen der Lichtleitkörper ein- und/oder auszuschalten.

Es kann vorgesehen sein, dass bei einem Erfassen eines ersten Rollwinkels die Steuereinheit eingerichtet ist, die erste Reihe der ersten oder der zweiten Lichtemissionshälfte des Optikkörpers anzusteuern bzw. einzuschalten, und wobei bei einem Erfassen eines zweiten Rollwinkels die Steuereinheit eingerichtet ist, die erste und die zweite Reihe der ersten oder der zweiten Lichtemissionshälfte des Optikkörpers anzusteuern bzw. einzuschalten.

Es kann vorgesehen sein, dass der Optikkörper eine dritte Reihe an Lichtleitkörpern umfasst, welche einen zweiten Winkelversatz zur ersten Reihe aufweist und symmetrisch um die vertikale Symmetrieachse angeordnet ist, und wobei der Optikkörper eine vierte Reihe an Lichtleitkörpern umfasst, welche einen dritten Winkelversatz zur ersten Reihe aufweist und symmetrisch um die vertikale Symmetrieachse angeordnet ist.

Es kann vorgesehen sein, dass bei einem Erfassen eines dritten Rollwinkels die Steuereinheit eingerichtet ist, die erste, zweite und dritte Reihe der ersten oder zweiten Lichtemissionshälfte des Optikkörpers anzusteuern bzw. einzuschalten, und wobei bei einem Erfassen eines vierten Rollwinkels die Steuereinheit eingerichtet ist, die erste, zweite, dritte und vierte Reihe der ersten oder zweiten Lichtemissionshälfte des Optikkörpers anzusteuern bzw. einzuschalten.

Es kann vorgesehen sein, dass der erste Rollwinkel in einem Bereich von 5° bis 7°, der zweiter Rollwinkel in einem Bereich von 7° bis 17°, der dritte Rollwinkel in einem Bereich von 17° bis 27° und der vierte Rollwinkel in einem Bereich über 27° liegt.

Es sei angemerkt, dass die obigen Winkelangaben als Absolutbeträge zu verstehen sind und auch die Negativwinkel inbegriffen sind, d.h. dass der Bereich der angegebenen Rollwinkel sowohl in einer Kurvenlange in Richtung rechts als auch in Richtung links gleichermaßen zu verstehen ist.

Es kann vorgesehen sein, dass die segmentierte Lichtverteilung eine segmentierte Fernlichtverteilung ist.

Die Aufgabe wird ebenso gelöst durch einen Kraftfahrzeugscheinwerfer mit zumindest einer erfindungsgemäßen Beleuchtungsvorrichtung.

Nachfolgend wird die Erfindung anhand von beispielhaften Zeichnungen näher erläutert. Hierbei zeigt
Fig. 1 eine beispielhafte Beleuchtungsvorrichtung mit einem Optikkörper und einer nachgeschalteten Projektionsoptik,
Fig. 2 eine Ansicht von oben des Optikkörpers der Beleuchtungsvorrichtung aus Fig. 1,
Fig. 3 eine Ansicht von hinten des Optikkörpers aus Fig. 2 mit Lichtleikörpern, welche in Reihen, die zueinander einen Winkelversatz aufweisen, angeordnet sind,
Fig. 3A eine Ansicht von hinten eines weiteren beispielhaften Optikkörpers,
Fig. 4A eine beispielhafte Lichtverteilung mit einer eingeschalteten ersten Reihe von Lichtleitkörpern,
Fig. 4B eine beispielhafte Lichtverteilung mit einer eingeschalteten ersten und zweiten Reihe von Lichtleitkörpern,
Fig. 4C eine beispielhafte Lichtverteilung mit einer eingeschalteten ersten, zweiten und dritten Reihe von Lichtleitkörpern, und
Fig. 4D eine beispielhafte Lichtverteilung mit einer eingeschalteten ersten, zweiten, dritten und vierten Reihe von Lichtleitkörpern.

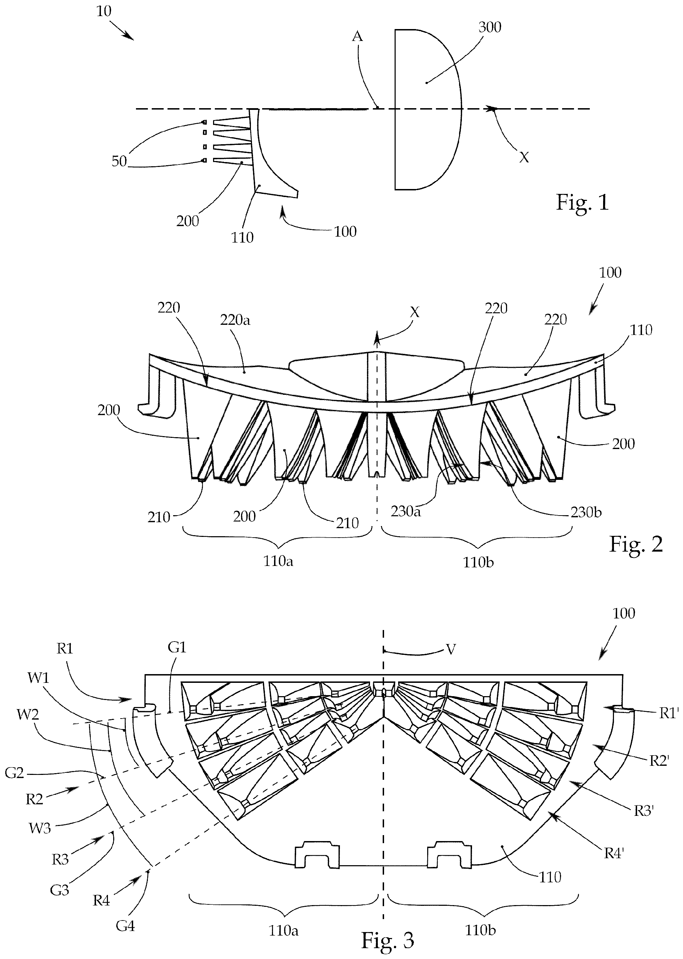

**Fig. 1** zeigt eine beispielhafte Beleuchtungsvorrichtung **10** für einen Kraftfahrzeugscheinwerfer eines einspurigen Kraftfahrzeugs, beispielsweise eines Motorrades, zur Erzeugung einer segmentierten Lichtverteilung, wobei die Beleuchtungsvorrichtung **10** einen Optikkörper **100** aufweist, umfassend einen Grundkörper **110** und mehrere von dem Grundkörper **110** vorragende Lichtleitkörper **200** zum Formen einer festlegbaren segmentierten Lichtverteilung aus dem Licht von Lichtquellen **50.**

Die Lichtleitkörper **200** weisen jeweils eine Lichteintrittsfläche **210** auf, in welche Licht von den Lichtquellen **50** einspeisbar ist, und eine Austrittsfläche **220** auf, aus welcher in den jeweiligen Lichtleitkörper **200** einspeisbares Licht austritt, wobei die Austrittsflächen **220** benachbarter Lichtleitkörper **200** eine gemeinsame Austrittsfläche **220a,** welche gekrümmt ausgebildet ist, des Optikkörpers **100** bilden.

Ferner umfasst die Beleuchtungsvorrichtung **10** mehrere Lichtquellen **50,** wobei zumindest eine Lichtquelle jeweils einer Eintrittsfläche **210** eines Lichtleitkörpers **200** zugeordnet ist, wobei die Beleuchtungsvorrichtung **10** weiters eine Projektionsoptik **300** mit einer optischen Achse A aufweist, welche Projektionsoptik **300** eingerichtet ist, dass von der gemeinsamen Austrittsfläche **220a** austretende Licht vor der Beleuchtungsvorrichtung **10** in Richtung einer Hauptabstrahlrichtung X abzubilden.

Ferner weist die Projektionsoptik **300** eine gekrümmte Brennfläche auf, wobei die gemeinsame Austrittsfläche **220a** des Optikkörpers **100** in der Brennfläche der Projektionsoptik **300** angeordnet ist, wobei die gemeinsame Austrittsfläche **220a** der Krümmung der Brennfläche der Projektionsoptik **300** folgt.

Der Grundkörper **110** weist eine erste und eine zweite Lichtemissionshälfte **110a, 110b** auf, wobei die erste Lichtemissionshälfte **110a** Lichtleitkörper **200** aufweist, die in einer ersten Reihe **R1** entlang einer Geraden **G1,** in einer zweiten Reihe **R2** entlang einer Geraden **G2,** in einer dritten Reihe **R3** entlang einer Geraden **G3** und in einer vierten Reihe **R4** entlang einer Geraden **G4** angeordnet sind, wobei die Geraden der ersten und der zweiten Reihe **R1, R2** zueinander um einen ersten Winkelversatz **W1** angeordnet sind, wobei die Geraden der ersten und der dritten Reihe **R1, R3** zueinander einen zweiten Winkelversatz **W2** aufweisen, wobei die Geraden der ersten und der vierten Reihe **R1, R4** einen dritten Winkelversatz **W3** zueinander aufweisen, und wobei die erste und die zweite Lichtemissionshälfte **110a, 110b** zueinander spiegelsymmetrisch um eine vertikale Symmetrieachse **V** an dem Grundkörper **110** angeordnet sind. Hierbei weist die zweite Lichtemissionshälfte **110b** ebenfalls vier Reihen **R1', R2', R3', R4',** welche ebenfalls den entsprechenden Winkelversatz zueinander aufweisen, wie die Reihen der ersten Lichtemissionshälfte **110a.**

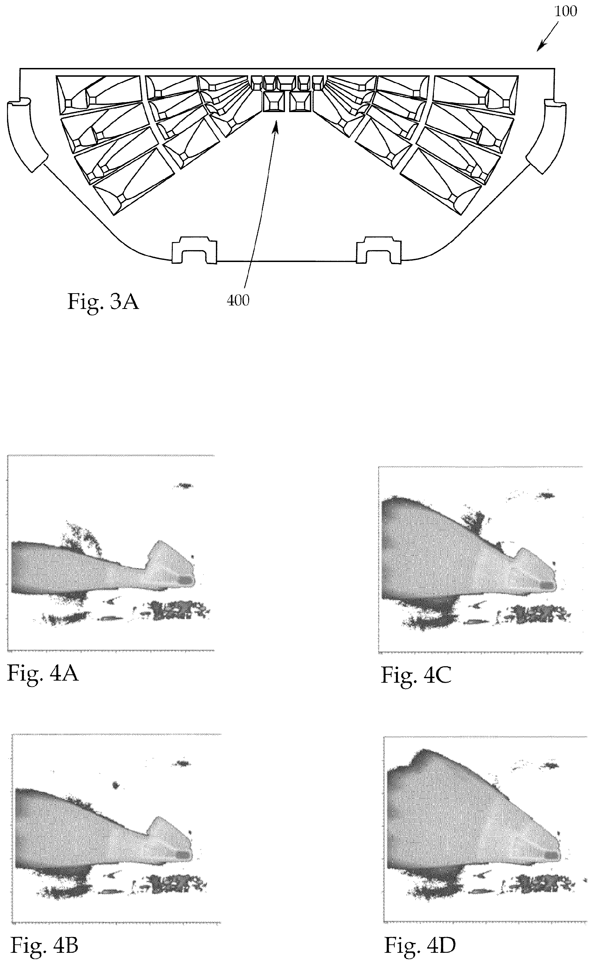

Dabei ist in **Fig. 2** und **Fig. 3** ersichtlich, dass die Austrittsflächen **220** der Lichtleitkörper **200** einer Reihe **R1, R1', R2, R2', R3, R3', R4, R4'** ausgehend von der vertikalen Symmetrieachse **V** größer werden.

Ferner sind die Eintrittsflächen **210** der Lichtleitkörper **200** in einer gemeinsamen Vertikalebene angeordnet, welche Vertikalebene orthogonal zur optischen Achse A der Projektionsoptik **300** angeordnet ist.

Wie in **Fig. 2** und **Fig. 3** ebenfalls zu sehen ist, weist jeder Lichtleitkörper **200** sich von der Eintrittsfläche **210** bis zur Austrittsfläche **220** erstreckende Seitenwände auf, wobei die Austrittsfläche **220** jeweils von zwei Schmalseiten und zwei Längsseiten begrenzt wird, wobei die Seitenflächen zumindest eines Lichtleitkörpers **200,** welche Seitenflächen orthogonal zu einer Richtung quer zur Hauptabstrahlrichtung **X** stehen, gekrümmt ausgebildet sind, wobei jene Seitenfläche **230a** des Lichtleitkörpers **200,** welche zur vertikalen Symmetrieachse **V** gerichtet ist, konvex ausgebildet ist, und jene Seitenfläche **230b** des Lichtleitkörpers **200,** welche entgegengesetzt zur vertikalen Symmetrieachse **V** gerichtet ist, konkav ausgebildet ist.

Ferner weist jede Reihe **R1, R1', R2, R2', R3, R3', R4, R4'** einen von der vertikalen Symmetrieachse **V** weg angeordneten äußersten Lichtleitkörper und zumindest einen innenliegenden Lichtleitkörper auf, wobei der zumindest eine innenliegende Lichtleitkörper jeder Reihe **R1, R1', R2, R2', R3, R3', R4, R4'** die gekrümmten Seitenflächen aufweist.

Darüber hinaus weisen die Eintrittsflächen **210** jedes Lichtleitkörpers **200** einen Parallelversatz zur entsprechenden Austrittsfläche **220** auf, sodass der Flächenmittelpunkt der Austrittsfläche **220** und der Flächenmittelpunkt der zugehörigen Eintrittsfläche **210** gesehen in Hauptabstrahlrichtung **X** einen Versatz aufweisen, wie in **Fig. 2** und **Fig. 3** zu sehen ist.

Weiters umfasst die Beleuchtungsvorrichtung **10** eine Steuereinheit und zumindest einen Rollwinkelsensor, welcher eingerichtet ist, einen Rollwinkel der Abweichung der Ist-Position von einer definierten Standardposition der Beleuchtungsvorrichtung **10** um die Hauptabstrahlrichtung **X** zu bestimmen, wobei die Steuereinheit eingerichtet ist, einen Rollwinkel von dem zumindest einen Rollwinkelsensor zu empfangen und abhängig von dem Rollwinkel einzelne Reihen **R1, R1', R2, R2', R3, R3', R4, R4'** der Lichtleitkörper 200 ein- und/oder auszuschalten.

**Fig. 3** zeigt ein weiteres Beispiel eines Optikkörpers **100,** wobei der Optikkörper **100** im Bereich, in welchem die zwei Lichtemissionshälften bei der vertikalen Symmetrieachse **V** zusammenlaufen, zwei Reihen **400** umfasst, aufweisend zumindest zwei Lichtleitkörper, wobei diese Reihe **400** entlang einer Geraden angeordnet ist, welche orthogonal zur vertikalen Symmetrieachse f angeordnet ist. Das zuvor Gesagte trifft auch auf die Ausführungsform der **Fig. 3A** zu.

**Figuren 4A, 4B, 4C** und **4D** zeigen jeweils beispielhafte Lichtverteilungen, bei welcher ein einspuriges Kraftfahrzeug, beispielsweise ein Motorrad, in einer Linkslage bzw. Linkskurve befindet, wobei je nach Rollwinkel einzelne Reihen der ersten Lichtemissionshälfte **110a** hinzugeschalten werden. Es sei angemerkt, dass das Gesagte auch für eine entsprechende Rechtslage bzw. Rechtskurve zu übernehmen ist.

Bei einem Erfassen eines ersten Rollwinkels ist die Steuereinheit eingerichtet, die erste Reihe **R1** der ersten oder zweiten Lichtemissionshälfte **110a, 110b** des Optikkörpers **100** anzusteuern bzw. einzuschalten, was in **Fig. 4A** zu sehen ist, und wobei bei einem Erfassen eines zweiten Rollwinkels die Steuereinheit eingerichtet ist, die erste und die zweite Reihe **R1, R2** der ersten oder der zweiten Lichtemissionshälfte **110a, 110b** des Optikkörpers **100** anzusteuern bzw. einzuschalten, was in **Fig. 4B** zu sehen ist.

Ferner ist bei einem Erfassen eines dritten Rollwinkels die Steuereinheit eingerichtet, die erste, zweite und dritte Reihe **R1, R2, R3** der ersten oder zweiten Lichtemissionshälfte **110a, 110b** des Optikkörpers **100** anzusteuern bzw. einzuschalten, was in **Fig. 4C** dargestellt ist, und wobei bei einem Erfassen eines vierten Rollwinkels die Steuereinheit eingerichtet ist, die erste, zweite, dritte und vierte Reihe **R1, R2, R3, R4** der ersten oder zweiten Lichtemissionshälfte **110a, 110b** des Optikkörpers **100** anzusteuern bzw. einzuschalten, was in **Fig. 4D** zu sehen ist.

Der erste Rollwinkel ist dabei in einem Bereich von 5° bis 7°, der zweiter Rollwinkel in einem Bereich von 7° bis 17°, der dritte Rollwinkel in einem Bereich von 17° bis 27° und der vierte Rollwinkel in einem Bereich über 27°.

### LISTE DER BEZUGSZEICHEN

- Beleuchtungsvorrichtung...: 10
- Lichtquellen...: 50
- Optikkörper...: 100
- Grundkörper...: 110
- Erste Lichtemissionshälfte...: 110a
- Zweite Lichtemissionshälfte...: 110b
- Lichtleitkörper...: 200
- Eintrittsfläche...: 210
- Austrittsfläche...: 220
- Gemeinsame Austrittsfläche...: 220a
- Projektionsoptik...: 300
- Optische Achse...: A
- Hauptabstrahlrichtung...: X
- Vertikale Symmetrieachse...: V
- Winkelversatz...: W1, W2, W3
- Reihen...: R1, R2, R3, R4, 400
- Geraden...: G1, G2, G3, G4

## Patentansprüche

1. Beleuchtungsvorrichtung (10) für einen Kraftfahrzeugscheinwerfer eines einspurigen Kraftfahrzeugs zur Erzeugung einer segmentierten Lichtverteilung, wobei die Beleuchtungsvorrichtung (10) Folgendes umfasst:
- ein Optikkörper (100), umfassend einen Grundkörper (110) und mehrere von dem Grundkörper (110) vorragende Lichtleitkörper (200) zum Formen einer festlegbaren segmentierten Lichtverteilung aus dem Licht von Lichtquellen (50), welche Lichtleitkörper (200) jeweils eine Lichteintrittsfläche (210) aufweisen, in welche Licht von den Lichtquellen (50) einspeisbar ist, und eine Austrittsfläche (220) aufweisen, aus welcher in den jeweiligen Lichtleitkörper (200) einspeisbares Licht austritt, wobei die Austrittsflächen (220) benachbarter Lichtleitkörper (200) eine gemeinsame Austrittsfläche (220a) des Optikkörpers (100) bilden,
- mehrere Lichtquellen (50), wobei zumindest eine Lichtquelle jeweils einer Eintrittsfläche (210) eines Lichtleitkörpers (200) zugeordnet ist,
- eine Projektionsoptik (300) mit einer optischen Achse (A), welche Projektionsoptik (300) eingerichtet ist, dass von der gemeinsamen Austrittsfläche (220a) austretende Licht vor der Beleuchtungsvorrichtung (10) in Richtung einer Hauptabstrahlrichtung (X) abzubilden,
**dadurch gekennzeichnet, dass**
der Grundkörper (110) eine erste und eine zweite Lichtemissionshälfte (110a, 110b) aufweist, wobei jede Lichtemissionshälfte (110a, 110b) Lichtleitkörper (200) aufweist, die zumindest in einer ersten Reihe (R1) entlang einer Geraden und in einer zweiten Reihe (R2) entlang einer Geraden angeordnet sind, wobei die Geraden der ersten und der zweiten Reihe (R1, R2) zueinander um einen ersten Winkelversatz (W1) angeordnet sind, und wobei die erste und die zweite Lichtemissionshälfte (110a, 110b) zueinander spiegelsymmetrisch um eine vertikale Symmetrieachse (V) an dem Grundkörper (110) angeordnet sind.

2. Beleuchtungsvorrichtung nach Anspruch 1, **dadurch gekennzeichnet, dass** die Austrittsflächen (220) der Lichtleitkörper (200) einer Reihe (R1, R2) ausgehend von der vertikalen Symmetrieachse (V) größer werden.

3. Beleuchtungsvorrichtung nach Anspruch 1 oder 2, **dadurch gekennzeichnet, dass** die Eintrittsflächen (210) der Lichtleitkörper (200) in einer gemeinsamen Vertikalebene angeordnet sind, welche Vertikalebene orthogonal zur optischen Achse (A) der Projektionsoptik (300) angeordnet ist.

4. Beleuchtungsvorrichtung nach einem der Ansprüche 1 bis 3, **dadurch gekennzeichnet, dass** die gemeinsame Austrittsfläche (220a) des Optikkörpers (100) gekrümmt ausgebildet ist.

5. Beleuchtungsvorrichtung nach einem der Ansprüche 1 bis 4, **dadurch gekennzeichnet, dass** die Projektionsoptik (300) eine gekrümmte Brennfläche aufweist, wobei die gemeinsame Austrittsfläche (220a) des Optikkörpers (100) in der Brennfläche der Projektionsoptik (300) angeordnet ist, wobei die gemeinsame Austrittsfläche (220a) zumindest abschnittweise der Krümmung der Brennfläche der Projektionsoptik (300) folgt.

6. Beleuchtungsvorrichtung nach einem der Ansprüche 1 bis 5, **dadurch gekennzeichnet, dass** jeder Lichtleitkörper (200) sich von der Eintrittsfläche (210) bis zur Austrittsfläche (220) erstreckende Seitenwände aufweist, wobei die Austrittsfläche (220) jeweils von zwei Schmalseiten und zwei Längsseiten begrenzt wird, wobei die Seitenflächen zumindest eines Lichtleitkörpers (200), welche Seitenflächen orthogonal zu einer Richtung quer zur Hauptabstrahlrichtung (X) stehen, gekrümmt ausgebildet sind, wobei jene Seitenfläche des Lichtleitkörpers (200), welche zur vertikalen Symmetrieachse (V) gerichtet ist, konvex ausgebildet ist, und jene Seitenfläche des Lichtleitkörpers (200), welche entgegengesetzt zur vertikalen Symmetrieachse (V) gerichtet ist, konkav ausgebildet ist.

7. Beleuchtungsvorrichtung nach Anspruch 6, **dadurch gekennzeichnet, dass** jede Reihe (R1, R2) einen von der vertikalen Symmetrieachse (V) weg angeordneten äußersten Lichtleitkörper und zumindest einen innenliegenden Lichtleitkörper aufweist, wobei der zumindest eine innenliegende Lichtleitkörper jeder Reihe (R1, R2) die gekrümmten Seitenflächen aufweist.

8. Beleuchtungsvorrichtung nach einem der Ansprüche 1 bis 7, **dadurch gekennzeichnet, dass** der Optikkörper im Bereich, in welchem die zwei Lichtemissionshälften bei der vertikalen Symmetrieachse (V) zusammenlaufen, zumindest eine Reihe (400) umfasst, aufweisend zumindest zwei Lichtleitkörper, wobei diese Reihe (400) entlang einer Geraden angeordnet ist, welche orthogonal zur vertikalen Symmetrieachse (V) angeordnet ist, wobei vorzugsweise der Optikkörper zwei Reihen (400) umfasst.

9. Beleuchtungsvorrichtung nach einem der Ansprüche 1 bis 8, **dadurch gekennzeichnet, dass** die Eintrittsflächen (210) jedes Lichtleitkörpers (200) einen Parallelversatz zur entsprechenden Austrittsfläche (220) aufweisen, sodass die Flächenmittelpunkte der Austrittsfläche (220) und der zugehörigen Eintrittsfläche (210) gesehen in Hauptabstrahlrichtung (X) einen Versatz aufweisen.

10. Beleuchtungsvorrichtung nach einem der Ansprüche 1 bis 9, **dadurch gekennzeichnet, dass** die Beleuchtungsvorrichtung (10) eine Steuereinheit und zumindest einen Rollwinkelsensor umfasst, welcher eingerichtet ist, einen Rollwinkel der Abweichung der Ist-Position von einer definierten Standardposition der Beleuchtungsvorrichtung (10) um die Hauptabstrahlrichtung (X) zu bestimmen, wobei die Steuereinheit eingerichtet ist, einen Rollwinkel von dem zumindest einen Rollwinkelsensor zu empfangen und abhängig von dem Rollwinkel einzelne Reihen (R1, R2) der Lichtleitkörper (200) ein- und/oder auszuschalten.

11. Beleuchtungsvorrichtung nach Anspruch 10, **dadurch gekennzeichnet, dass** bei einem Erfassen eines ersten Rollwinkels die Steuereinheit eingerichtet ist, die erste Reihe (R1) der ersten oder der zweiten Lichtemissionshälfte (110a, 110b) des Optikkörpers (100) anzusteuern bzw. einzuschalten, und wobei bei einem Erfassen eines zweiten Rollwinkels die Steuereinheit eingerichtet ist, die erste und die zweite Reihe (R1, R2) der ersten oder der zweiten Lichtemissionshälfte (110a, 110b) des Optikkörpers (100) anzusteuern bzw. einzuschalten.

12. Beleuchtungsvorrichtung nach einem der Ansprüche 1 bis 11, **dadurch gekennzeichnet, dass** der Optikkörper (100) eine dritte Reihe (R3) an Lichtleitkörpern (200) umfasst, welche einen zweiten Winkelversatz zur ersten Reihe (R1) aufweist und symmetrisch um die vertikale Symmetrieachse (V) angeordnet ist, und wobei der Optikkörper (100) eine vierte Reihe (R4) an Lichtleitkörpern umfasst, welche einen dritten Winkelversatz zur ersten Reihe (R1) aufweist und symmetrisch um die vertikale Symmetrieachse (V) angeordnet ist.

13. Beleuchtungsvorrichtung nach Anspruch 12, **dadurch gekennzeichnet, dass** bei einem Erfassen eines dritten Rollwinkels die Steuereinheit eingerichtet ist, die erste, zweite und dritte Reihe (R1, R2, R3) der ersten oder zweiten Lichtemissionshälfte (110a, 110b) des Optikkörpers (100) anzusteuern bzw. einzuschalten, und wobei bei einem Erfassen eines vierten Rollwinkels die Steuereinheit eingerichtet ist, die erste, zweite, dritte und vierte Reihe (R1, R2, R3, R4) der ersten oder zweiten Lichtemissionshälfte (110a, 110b) des Optikkörpers (100) anzusteuern bzw. einzuschalten.

14. Beleuchtungsvorrichtung nach einem der Ansprüche 1 bis 13, **dadurch gekennzeichnet, dass** die segmentierte Lichtverteilung eine segmentierte Fernlichtverteilung oder Abblendlichtverteilung ist.

15. Kraftfahrzeugscheinwerfer mit zumindest einer Beleuchtungsvorrichtung (10) gemäß einem der Ansprüche 1 bis 14.
